# EUROPEAN PATENT SPECIFICATION

(11) **EP 3 432 270 B1**
(45) Date of publication and mention of the grant of the patent: **13.05.2020**
(21) Application number: 18178076.8
(22) Date of filing: 15.06.2018
(51) Int. Cl.: G06T 7/536, G06T 7/12, G06T 7/162

(54) **SYSTEM AND METHOD FOR MODELING A THREE DIMENSIONAL SPACE BASED ON A TWO DIMENSIONAL IMAGE**
SYSTEM UND VERFAHREN ZUR MODELLIERUNG EINES DREIDIMENSIONALEN RAUMES BASIEREND AUF EINEM ZWEIDIMENSIONALEN BILD
SYSTÈME ET PROCÉDÉ DE MODÉLISATION D'UN ESPACE TRIDIMENSIONNEL SUR LA BASE D'UNE IMAGE BIDIMENSIONNELLE

(30) Priority: 19.06.2017 GB 201709733
(43) Date of publication of application: 23.01.2019
(73) Proprietor: Shortbite Ltd, Manchester, Greater Manchester M15 6SE (GB)
(72) Inventor: Fergie, Martin, Manchester, Greater Manchester M15 6JJ (GB)
(74) Representative: Dentons UK and Middle East LLP

(56) References cited:
- YANG HAO ET AL: "Efficient 3D Room Shape Recovery from a Single Panorama", 2016 IEEE CONFERENCE ON COMPUTER VISION AND PATTERN RECOGNITION (CVPR), IEEE, 27 June 2016 (2016-06-27), pages 5422-5430, XP033021738, DOI: 10.1109/CVPR.2016.585 [retrieved on 2016-12-09]
- MICUSIK B ET AL: "Towards detection of orthogonal planes in monocular images of indoor environments", 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW, IEEE - PISCATAWAY, NJ, USA, PISCATAWAY, NJ, USA, 19 May 2008 (2008-05-19), pages 999-1004, XP031340279, ISBN: 978-1-4244-1646-2

## Description

The present application relates to a system and method for modeling a three-dimensional space based on a two-dimensional image.

### Background

When offering home improvement products or services, such as furniture, or decoration such as wallpaper or painting, it is known to assist the potential customer to visualize the appearance or effect of a product or service by producing an image of the possible appearance of an existing room as it will appear with the product or service in or applied to the room. Such an image may for example show a new item of furniture in the room, or show the room with a new paint or wallpaper on some of the walls.

In order to produce an image of the possible appearance of the room, one approach is to produce three dimensional (3D) model of the room, and to use this model as a basis for the image. The image may, for example, be produced by adding 3D models of proposed items of furniture to the 3D model of the room, or rendering areas of the 3D model of the room to mimic the appearance of proposed paint or wallpaper.

One possible approach to producing a 3D model of a room is to automatically generate the 3D model of the room from a conventional two dimensional (2D) image of the room provided by the customer. However, there can be a problem with this approach that the boundaries between the different surfaces of the room may not be properly identified, so that the 3D model is not correct. This may result in any images of the possible appearance of the room based on the model being incorrect, which may misinform the potential customer regarding the possible appearance of the room, and may in some cases be so plainly wrong as to damage or destroy customer faith in the accuracy of the images. Techniques for the recovery of a room shape from a single panoramic image are for instance known from Yang, H. and Zhang, H., "Efficient 3D Room Shape Recovery from a Single Panorama", Proc. IEEE Conf. on Computer Vision and Pattern Recognition, pp. 5422-5430, 2016.

The embodiments described below are not limited to implementations which solve any or all of the disadvantages of the known approaches described above.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A system and method is provided for modeling a three-dimensional space based on a two-dimensional image of the three-dimensional space by: obtaining line segments from a photograph of an indoor scene and extracting image super-pixels from the two-dimensional image; using a likelihood function to assign a first weighting to each super pixel boundary based on how closely the boundary corresponds with a line segment using the product of two likelihoods, the perpendicular distance between the line segment and the super pixel boundary and the difference in orientation between the super pixel boundary and the line segment; using a boundary estimation technique to estimate a probability of each pixel representing a boundary between two objects in the image and assigning a second weighting based on this probability; taking the product of the first and second weightings to form combined boundary weightings; partitioning the graph formed by the super pixels and the combined boundary weightings with a number of partitions chosen to match the number of surfaces in the image defined by the line segments; combining this partitioning with the first boundary weights by summing the first weightings and the combined boundary weightings to give a final super pixel graph; and obtaining a final segmentation of the final super pixel graph.

In a first aspect, the present disclosure provides a computer implemented modeling system according to claim 1 for automatically modeling a three-dimensional space based on a two-dimensional image of the three-dimensional space, the system comprising: means arranged to obtain line segments corresponding to boundaries between surfaces of a three-dimensional space which are visible in the two-dimensional image; means arranged to identify super-pixels and super-pixel boundaries between the super-pixels in the two-dimensional image of the three-dimensional space; means arranged to assign first weighting values to pixels of identified super-pixel boundaries, the first weighting values assigned to pixels of a super-pixel boundary being determined by: assigning a first likelihood value to the super-pixel boundary based upon the perpendicular distance between the super-pixel boundary and a nearest line segment; assigning a second likelihood value to the super-pixel boundary based upon the difference in orientation between the super-pixel boundary and the nearest line segment; calculating the product of the first likelihood value and the second likelihood value; and assigning the product as a first weighting value to pixels of the super-pixel boundary; means arranged to estimate the probability of pixels of the two-dimensional image representing a boundary between two objects in the two-dimensional image and assigning second weighting values to pixels based on the estimated probability; means arranged to determine third weighting values for pixels of the two-dimensional image wherein the third weighting value is the product of the first weighting value and the second weighting value; means arranged to partition a graph formed by the determined third weighting values with a number of partitions corresponding to the number of surfaces of the three-dimensional space which are visible in the two dimensional image to obtain a partitioned graph; means arranged to combine the partitioned graph with the second weighting value to obtain a super-pixel graph by summing the third weighting value and the second weighting value assigned to each pixel; and means arranged to segment the super-pixel graph to form a three-dimensional model of the three-dimensional space shown in the two-dimensional image.

Preferably. the first likelihood value is based upon a perpendicular distance between a centroid of the super-pixel boundary and the nearest line segment.

Preferably, the second likelihood value is based upon a difference in orientation between the super-pixel boundary and the nearest line segment.

Preferably, the first likelihood value is a Gaussian likelihood value.

Preferably, the second likelihood value is a Gaussian likelihood value.

Preferably, the probability of a pixel of the two-dimensional image representing a boundary between two objects in the two-dimensional image is estimated based on the identified super-pixels.

Preferably, the graph formed by the determined third weighting values is partitioned using a Normalised cuts algorithm.

Preferably, the three-dimensional space is a room.

Preferably, the two-dimensional image is a colour image and the means arranged to estimate the probability of a pixel of the two-dimensional image representing a boundary between two objects in the two-dimensional image is arranged to estimate the probability based upon a comparison of colour values of pixels of the two-dimensional image.

Preferably, the colour values are RGB values.

Preferably, the means arranged to obtain line segments corresponding to boundaries between surfaces of the three-dimensional space which are visible in the two-dimensional image is arranged to fit orthogonal surfaces to the two-dimensional image of the three-dimensional space and use edges of the fitted orthogonal surfaces as the line segments.

Preferably, the means arranged to obtain line segments corresponding to boundaries between surfaces of the three-dimensional space which are visible in the two-dimensional image is arranged to: identify vanishing points in the two-dimensional image; determine extrinsic camera parameters of the camera used to produce the two-dimensional image from the identified vanishing points; determine intrinsic camera parameters of the camera from the determined extrinsic camera parameters; and use the determined extrinsic and intrinsic camera parameters to estimate the positions of the surfaces of the three dimensional space and the intersecting edges between the surfaces; fit orthogonal surfaces to the estimated positions of the surfaces of the three-dimensional space and the intersecting edges between the surfaces.

Preferably, the means arranged to obtain line segments corresponding to boundaries between surfaces of the three-dimensional space which are visible in the two-dimensional image is arranged to identify the vanishing points in the two dimensional image using the Manhattan assumption.

Preferably, the system is arranged to use the fitted orthogonal surfaces to determine the number of surfaces of the three-dimensional space which are visible in the two dimensional image.

Preferably, the means arranged to obtain line segments corresponding to boundaries between surfaces of the three-dimensional space which are visible in the two-dimensional image is arranged to fit orthogonal surfaces to the two-dimensional image of the three-dimensional space by fitting a best fit cuboid to the two-dimensional image of the three-dimensional space.

In a second aspect, the present disclosure provides a computer implemented method according to claim 8 of automatically modeling a three-dimensional space based on a two-dimensional image of the three-dimensional space, the method comprising: obtaining line segments corresponding to boundaries between surfaces of a three-dimensional space which are visible in the two dimensional image; identifying super-pixels and super-pixel boundaries between the super-pixels in the two-dimensional image of the three-dimensional space; assigning first weighting values to pixels of identified super-pixel boundaries, the first weighting values assigned to pixels of a super-pixel boundary being determined by: assigning a first likelihood value to the super-pixel boundary based upon the perpendicular distance between the super-pixel boundary and a nearest line segment; assigning a second likelihood value to the super-pixel boundary based upon the difference in orientation between the super-pixel boundary and the nearest line segment; calculating the product of the first likelihood value and the second likelihood value; and assigning the product as a first weighting value to pixels of the super-pixel boundary; estimating the probability of pixels of the two-dimensional image representing a boundary between two objects in the two-dimensional image and assigning second weighting values to pixels based on the estimated probability; determining third weighting values for pixels of the two-dimensional image wherein the third weighting value is the product of the first weighting value and the second weighting value; partitioning a graph formed by the determined third weighting values with a number of partitions corresponding to the number of surfaces of the three-dimensional space which are visible in the two dimensional image to obtain a partitioned graph; combining the partitioned graph with the second weighting value to obtain a super-pixel graph by summing the third weighting value and the second weighting value assigned to each pixel; and segmenting the super-pixel graph to form a three-dimensional model of the three-dimensional space shown in the two-dimensional image.

Preferably, the first likelihood value is based upon the perpendicular distance between a centroid of the super-pixel boundary and the nearest line segment.

Preferably, the second likelihood value is based upon a difference in orientation between the super-pixel boundary and the nearest line segment.

Preferably, the first likelihood value is a Gaussian likelihood value.

Preferably, the second likelihood value is a Gaussian likelihood value.

Preferably, the probability of a pixel of the two-dimensional image representing a boundary between two objects in the two-dimensional image is estimated based on the identified super-pixels.

Preferably, the graph formed by the determined third weighting values is partitioned using a Normalised cuts algorithm.

Preferably, the three dimensional space is a room.

Preferably, the two-dimensional image is a colour image and the estimating the probability of a pixel of the two-dimensional image representing a boundary between two objects in the two-dimensional image is based upon a comparison of colour values of pixels of the two-dimensional image.

Preferably, the colour values are RGB values.

Preferably, obtaining the line segments comprises fitting orthogonal surfaces to the two-dimensional image of the three-dimensional space and using edges of the fitted orthogonal surfaces as the line segments.

Preferably, obtaining line segments corresponding to boundaries between surfaces of the three-dimensional space which are visible in the two-dimensional image comprises: identifying vanishing points in the two-dimensional image; determining extrinsic camera parameters of the camera used to produce the two-dimensional image from the identified vanishing points; determining intrinsic camera parameters of the camera from the determined extrinsic camera parameters; and using the determined extrinsic and intrinsic camera parameters to estimate the positions of the surfaces of the three-dimensional space and the intersecting edges between the surfaces; and fitting orthogonal surfaces to the estimated positions of the surfaces of the three-dimensional space and the intersecting edges between the surfaces.

Preferably, the identifying the vanishing points in the two dimensional image uses the Manhattan assumption.

Preferably, the fitted orthogonal surfaces are used to determine the number of surfaces of the three-dimensional space which are visible in the two dimensional image.

Preferably, fitting orthogonal surfaces to the two-dimensional image of the three-dimensional space comprises fitting a best fit cuboid to the two-dimensional image of the three-dimensional space.

In a third aspect, the present disclosure provides a computer program according to claim 15 comprising computer readable instructions which, when executed by a processor of a computer cause the computer to carry out the method of the second aspect.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 is a schematic diagram of a system modeling a three-dimensional space based on a two-dimensional image according to a first embodiment of the present invention;
Figure 2 is a flow chart of a method of modeling a three-dimensional space based on a two-dimensional image carried out by the system of the first embodiment;
Figure 3 is a more detailed schematic diagram of modules of the system of the first embodiment; and
Figure 4 is an explanatory diagram of some concepts used in operation of the system of the first embodiment.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

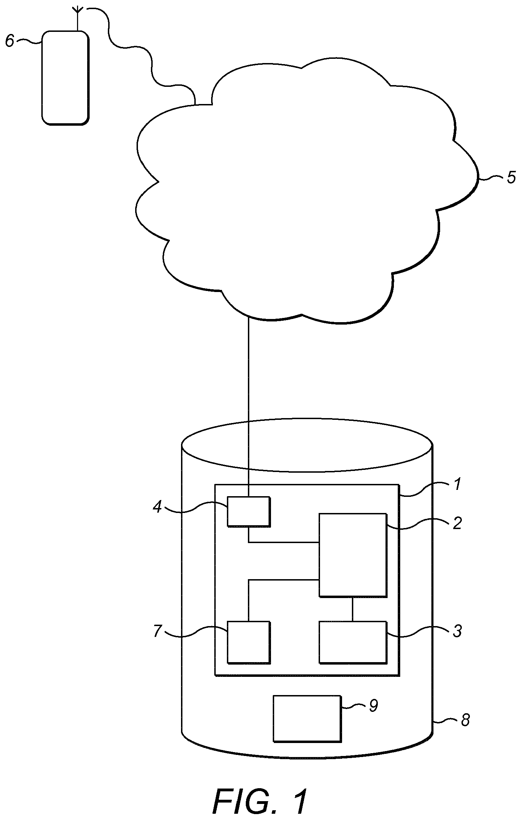

Figure 1 illustrates a system for producing a three dimensional model of a space based on a two dimensional image of the space according to a first embodiment.

In Figure 1, a three dimensional modeling system 1 is shown. The modeling system 1 comprises a processor 2 and a memory 3. The memory 3 stores instructions, such as programs, providing operating instructions for the processor 2, and also stores other data used or generated during operation of the modeling system 1, as will be discussed in more detail below.

The modeling system 1 further comprises a communications module 4 arranged to receive two dimensional (2D) image data of a space of interest to be modeled in three dimensions (3D), and a user interface 7. In the illustrated embodiment of figure 1 the communications module 4 is connected to a communications network 5, and is arranged to receive 2D image data of spaces of interest from remote mobile communication devices "mobile devices" 6 connected to the network 5. The user interface 7 enables instructions to be input to the system 1 by a user, and information to be provided to the user by the system 1.

Only one mobile device 6 is shown in figure 1, for clarity. It will be understood that in practice there may be a very large number of mobile devices 6 connected to the network 5.

In the illustrated embodiment the communications network 5 is the Internet. The mobile devices 6 may, for example, be a mobile phones or smartphones.

The network 5 is shown schematically in figure 1. It will be understood that the network 1 may in practice comprise a very large number of components, but these are not described or shown to improve clarity and to avoid obscuring the scope of the present invention. In practice, the network 5 may also be connected to other networks. To improve clarity, such other networks are not shown in figure 1.

According to the present invention the modeling system 1 is arranged to process 2D images of spaces of interest to generate 3D models of the spaces of interest.

In one possible application the modeling system 1 is operated by an operator such as a company providing furniture, or decorating or interior design services, and the spaces of interest are rooms which customers are interested in furnishing or decorating. In this application the modeling system 1 is used to process 2D images of room interiors provided by customers to generate corresponding 3D models of the rooms. These 3D models may then be used to render images of the appearance of the rooms if proposed furnishings or decoration is provided in the rooms.

In the illustrated embodiment the modeling system 1 may be comprised in a server 8 connected to the network 5 and hosting a website 9 offering the products or services of the operator company.

In the embodiment illustrated in figure 1, when a customer having a mobile device 6 uses the mobile device to access the website 9 on the server 8 and view products and/or services offered by the operator of the system, the customer is prompted by the website 9 to submit an image of a room of interest so that the customer can be shown an image or images of this room with the selected products or services applied to the room. For example, an image of the room with selected furniture in the room, or an image of the room with a selected paint or wallpaper applied to one or more walls or a ceiling of the room.

The customer can then use the mobile device 6 to take a colour 2D image, such as a conventional digital colour photograph, of a room of interest, or can select a previously taken colour 2D image of the room of interest, and then send this 2D image to the server 8 through the network 5. The system 1 then receives the sent 2D image through the communications module 4 and stores this received 2D image in the memory 3.

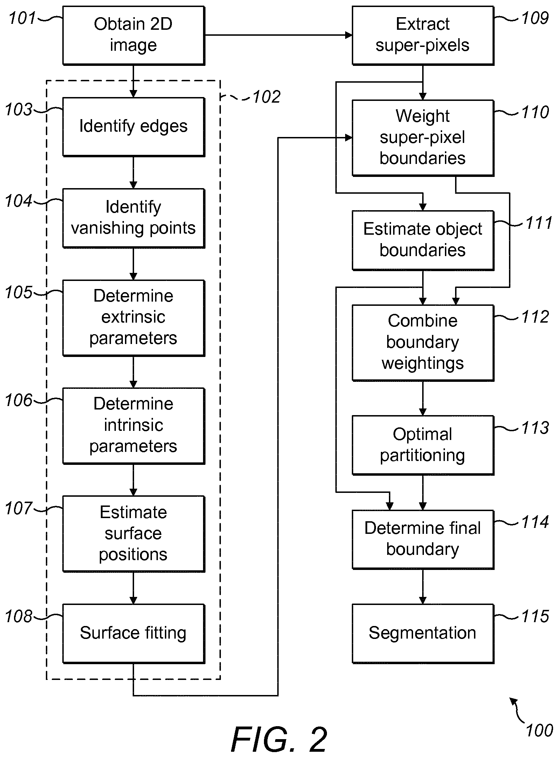

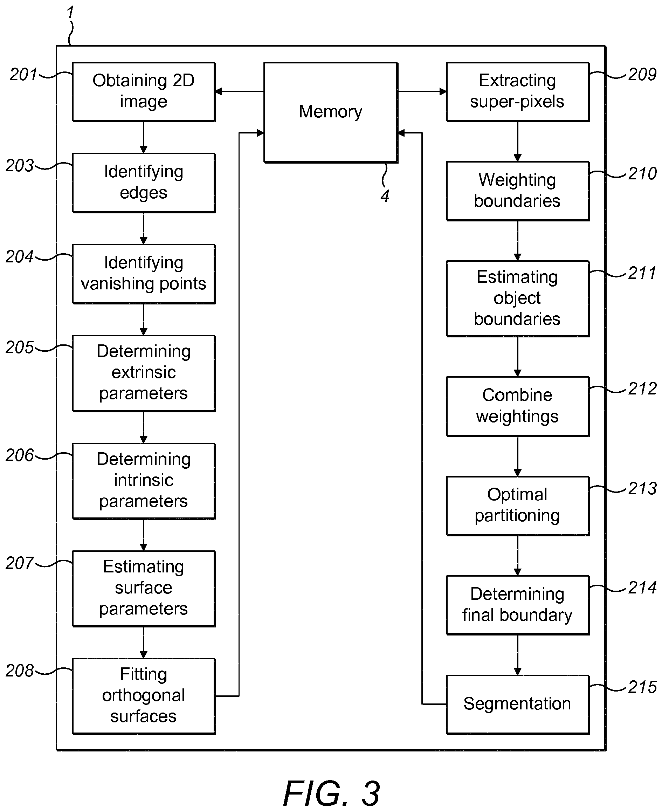

Figure 2 shows a flow chart of a method used by the system of the first embodiment shown in figure 1 to produce the three dimensional model based on the two dimensional image. Figure 3 shows an arrangement of functional modules used by the system of the first embodiment shown in figure 1 to carry out the method of figure 2 and so produce the three dimensional model based on the two dimensional image. In the illustrated embodiment the functional modules are software modules executed by the processor 2.

In order to generate a 3D model of a room from the received 2D image of the room, the system 1 carries out a method 100 as illustrated in the flow diagram of figure 2.

The method 100 begins with a first obtain 2D image step 101 in which an image obtaining module 201 of the system 1 obtains a 2D image of a room of interest. In the illustrated embodiment the 2D image is obtained by being retrieved from the memory 4, in which it has previously been stored.

In order to generate a 3D model of the room, the system 1 first carries out a scene geometry estimation process 102 to generate an estimated scene geometry defining the boundaries in three dimensions of the room shown in the obtained image.

In the scene geometry estimation process 102, first, in an identify edges step 103 an edge identification module 203 of the system 1 analyses the image and identifies edges in the image. These edges are defined by the boundaries of and/or between the different surfaces visible in the image of the room. These boundaries may include the boundaries of and/or between the surfaces defining the room, such as the walls, floor and ceiling. Further, these boundaries may include the boundaries of surfaces of and/or between objects in the room, such as furniture.. The skilled person will be aware of a number of known techniques suitable for carrying out this edge identification, and any of these known techniques can be used.

Next, in an identify vanishing points step 104 a vanishing point identifying module 204 of the system 1 uses the identified edges to identify the three dominant vanishing points of the image, by using the Manhattan assumption that the imaged room is defined by orthogonal surfaces, so that three dominant vanishing points exist in the image, and these three vanishing points are orthogonal. The Manhattan assumption is limited to rooms defined by orthogonal surfaces, such as substantially cuboid rooms or rooms made up of a number of cuboids. However, in practice the proportion of rooms which are not defined by orthogonal surfaces is extremely small. The skilled person will be aware of a number of known techniques suitable for carrying out vanishing point identification, and any of these known techniques can be used.

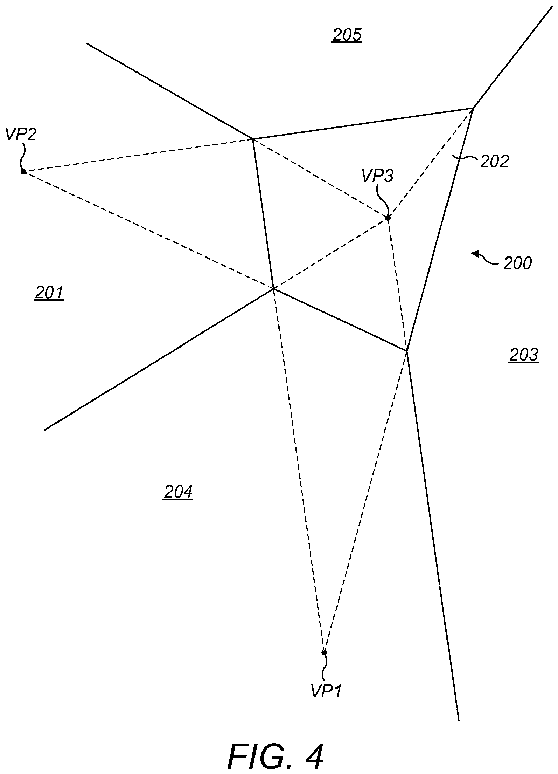

Figure 4 shows an explanatory example of an image 300 of a room having a cuboid shape defined by orthogonal surfaces comprising three visible walls 301, 302 and 303, a floor 304 and a ceiling 305. The three dominant vanishing points VP1, VP2 and VP3 are located at the intersection points of the boundary lines between the different orthogonal surfaces of the walls 301, 302 and 303, floor 304 and ceiling 305.

Next, in a determine extrinsic camera parameters step 105 an extrinsic camera parameter determining module 205 of the system 1 determines the extrinsic camera parameters of the position and orientation of the camera used to generate the 2D image when the 2D image was generated from the identified vanishing points. The skilled person will be aware of a number of known techniques suitable for determining extrinsic camera parameters, and any of these known techniques can be used.

Next, in a determine intrinsic parameters step 106 an intrinsic camera parameter determining module 206 of the system 1 determines the intrinsic camera parameter of the focal length of the camera used to generate the 2D image from the determined extrinsic camera parameters. The skilled person will be aware of a number of known techniques suitable for determining intrinsic camera parameters, and any of these known techniques can be used.

Next, in an estimate surface positions step 107, a surface position estimating module 207 of the system 1 uses the determined extrinsic and intrinsic camera parameters to estimate the positions of the surfaces of the room and the intersecting edges between these surfaces.

Then, in an orthogonal surface fitting step 108 an orthogonal surface fitting module 208 of the system 1 identifies a number of best fitting orthogonal surfaces providing a best fit to the estimated positions of the surfaces in the room and their edges produced in the estimate surface positions step 107. These best fitting orthogonal surfaces will correspond to the dimensions and position of the surfaces of the room in the image. The skilled person will be aware of a number of known techniques suitable for estimating room surface and edge positions and orthogonal surface fitting, and any of these known techniques can be used.

The positions of the edges of the orthogonal surfaces produced by the orthogonal surface fitting module 208 in the scene geometry estimation process 102 and the number of orthogonal surfaces visible in the image are then stored in the memory 4 for subsequent use. In the illustrated embodiment these edge positions are stored as line segments representing the estimated scene geometry of the imaged room.

After the scene geometry estimation process 102 has been completed in step 108, a super pixel extraction module 209 of the system 1 carries out an extract super-pixels step 109 in which the system 1 processes the RGB values of the obtained image obtained in the obtain image step 101 to identify and define atomic and coherent super-pixels having the same, or substantially similar RGB values, and the super-pixel boundaries between these super-pixels. These super-pixels may also be referred to as patches. The skilled person will be aware of a number of known techniques suitable for identifying and defining super-pixels, and any of these known techniques can be used.

Next, in a weight super-pixel boundaries step 110 a super-pixel boundary weighting module 210 of the system 1 assigns a weighing value to each of the super-pixel boundaries between the super-pixels defined in the extract super-pixels step 109 using a likelihood function.

In the weight super-pixel boundaries step 110 the module 210 of the system 1 compares each super-pixel boundary to the line segments produced by the scene geometry estimation process 102. The module 210 of the system 1 assigns each super-pixel boundary a first Gaussian likelihood value based upon the perpendicular distance between the super-pixel boundary centroid and the nearest line segment, with the likelihood value decreasing with increasing perpendicular distance. Further, the module 210 of the system 1 assigns each super-pixel boundary segment a second Gaussian likelihood value based upon the difference in orientation between the super-pixel boundary and the nearest line segment, with the likelihood value decreasing with increasing angular difference in orientation. Preferably, the difference in orientation is measured between the line segment and a line formed between end points of the super-pixel boundary. Then, the module 210 of the system 1 calculates the product of the assigned first and second Gaussian likelihoods for each super-pixel boundary. Finally, the module 210 of the system 1 assigns the product of the assigned first and second Gaussian likelihood values to the pixels of the respective super-pixel boundary as a first weighting value. Pixels which are not identified as pixels of a super-pixel boundary are assigned a null first weighting value, typically zero.

Then, in an estimate object boundaries step 111 an object boundary estimating module 211 of the system 1 uses a boundary estimation technique to estimate the probability of each pixel in the obtained image being a boundary between different objects or surfaces visible in the obtained image based on the super-pixels and the boundaries between the super-pixels defined in the extract super-pixels step 109, and assigns a second weighting value to each pixel, with a larger weighting value corresponding to a higher probability that a boundary is present. The skilled person will be aware of a number of known techniques suitable for assigning boundary probabilities to pixels based on identified super-pixels, and any of these known techniques can be used.

Next, in a combine boundary weightings step 112 a boundary weighting combining module 212 of the system 1 combines the first and second weighting values produced in the weight super-pixel boundaries step 110 and the estimate object boundaries step 111 for each pixel of the image. This combination is carried out by the module 212 of the system 1 calculating the product of the first and second weighting values assigned to each pixel, and assigning this product to the pixel as a combined boundary weighting value.

Next, in an optimal partitioning step 113 an optimal partitioning module 213 of the system 1 partitions or segments the graph formed by the super-pixels and their combined boundary weighting values produced in the combine boundary weightings step 112 into a number of partitions corresponding to the number of surfaces of the room identified in the estimate surface positions step 107. This partitioning may be carried out using the known Normalised Cuts algorithm. The skilled person will be aware of other known suitable partitioning or segmenting techniques, and any of these known techniques may be used.

The optimal partitioning step 113 will produce a partitioned graph based upon the geometry estimation and the RGB image boundaries. In this partitioned graph, where there is a strong image boundary which substantially agrees with a line segment, the image is partitioned along the strong image boundary. Further, where there will be no image boundary within a reasonable distance from a line segment, the image will be partitioned along the line segment.

Next, in a determine final boundary step 114 a final boundary determining module 214 of the system 1 combines the partitioned graph produced in the optimal partitioning step 113 with the second weighting values assigned to the image pixels in the estimate object boundaries step 111. This combination is made by adding or summing the respective combined weighting value assigned to each boundary pixel in the partitioned graph in the combine boundary weightings step 112 with the respective second weighting value assigned to that pixel in the estimate object boundaries step 111 to produce a final boundary weight for each pixel. The resulting set of final boundary weights is then used to form a super-pixel graph.

Finally, in a segmentation step 115 the super-pixel graph produced in the determine final boundary step 114 is segmented by a segmentation module 215 of the system 1 to segment the different surfaces of the room, typically the floor, the ceiling, and a number of walls defining the room, and any objects in the room. The skilled person will be aware of a number of known techniques suitable for carrying out such segmentation, and any of these known techniques can be used.

The segmented super-pixel graph produced in the segmentation step 115 is stored in the memory 4 of the three dimensional modeling system 1. The segmented super-pixel graph will be segmented to separate each surface or object in the 2D image of the room.

The three dimensional modeling system 1 can then use the segmented super-pixel graph stored in the memory 2 as a 3D model of the room shown in the photograph. The three dimensional modeling system 1 may use this 3D model to render images of the appearance of the room photographed by the customer with the selected furnishings or decoration provided in the room.

The server 8 can then make the rendered images of the room produced by the three dimensional modeling system 1 available to the customer who provided the colour 2D image through the website 9. The customer may, for example, be able to view the rendered images using a web browser of the mobile device 6.

In alternative examples, the rendered images may be provided to the customer in other formats instead of, or in addition to, being able to view the rendered images on the website 9 using a browser. The providing of the rendered images in other formats may allow customers to store or view the rendered images more conveniently.

In the above description the embodiment is described in terms of the segmentation being carried out in image space. The same procedure can be carried out on any graph *G* = {*V, E*}, with vertices *V* representing the super-pixels, and edges *E* each having a positive real-valued weight representing the boundary strength between neighboring vertices.

In the illustrated embodiment the network is the Internet. In alternative examples other networks may be used in addition to, or instead of, the Internet.

In the illustrated embodiment the space of interest is a room. In other examples the described techniques may be applied to spaces other than rooms.

In the illustrated embodiment the modeling system is used by a company providing furniture, or decorating or interior design services to render images of rooms provided with with proposed furnishings or decoration. In other examples the modeling system may be used to render images of other spaces, or may be used to provide 3D models of spaces for other purposes than image rendering.

The embodiment described above relate to a modeling system comprised in a server hosting a website. In alternative examples the modeling system may be a stand alone system, or may be incorporated in some other system.

In the embodiment described above the server 8 may comprise a single server or network of servers. In some examples the functionality of the server 8 may be provided by a network of servers distributed across a geographical area, such as a worldwide distributed network of servers, and a user may be connected to an appropriate one of the network of servers based upon a user location.

The above description discusses embodiments of the invention with reference to a single customer for clarity. It will be understood that in practice the system may be shared by a plurality of customers, and possibly by a very large number of customers simultaneously.

The above description discusses embodiments of the invention with reference to a mobile communication device which is used to take a colour 2D image of a room of interest, to send this 2D image to the server, and to view the rendered images produced by the modeling system. Although this is expected to be a convenient option, in alternative examples different devices may be used to take the 2D image and/or send the 2D image, and/or to view the rendered images.

In the illustrated embodiment the customer sends the 2D image to the modeling system through a network. In alternative examples the customer may provide the 2D image to the modeling system in other ways. In one example, the customer could bring a device containing a stored copy of the 2D image to the premises of a company operating the modeling system and download the 2D image to the modeling system through a cable connection or a short range wireless link.

The embodiment described above are fully automatic. In some alternative examples a user or operator of the modeling system may instruct some steps of the method to be carried out. In one alternative example the identify edges step 103 may be carried out manually to provide the identified edges. In another alternative example the entire scene geometry estimation process 102 may be carried out manually to provide the edge positions and/or line segments representing the estimated scene geometry of the imaged room.

In the illustrated embodiment the 2D image is stored in, and subsequently obtained from the memory 4. In alternative examples the 2D image may be stored in and obtained from a different location.

In the illustrated embodiment a specific scene geometry estimation process 102 to produce the best fit orthogonal surfaces is described in detail. In alternative examples, a different scene geometry estimation process may be used to do this. The skilled person will be aware of a number of known techniques suitable for carrying out the scene geometry estimation process, and any of these known techniques can be used.

In the illustrated embodiment an automated scene geometry estimation process is used to produce the best fit orthogonal surfaces. In other examples the best fit orthogonal surfaces may be produced by manual estimation, or by a scene geometry estimation process including some manual estimation steps.

In some examples the best fit orthogonal surfaces may be the surfaces of a best fit cuboid providing a best fit to the estimated positions of the surfaces in the room and their edges.

In the illustrated embodiment the extract super-pixels step 109 is carried out after the scene geometry estimation process 102 has been completed. In alternative examples the extract super-pixels step 109 could be carried out before the scene geometry estimation process 102, or could be carried out in parallel to with the scene geometry estimation process 102.

In the illustrated embodiment the obtain image step is carried out once. In alternative examples the obtain image step may be carried out twice to separately obtain the images used in the scene geometry estimation process 102 and the extract super-pixels step 109.

In the illustrated embodiment the 2D image is a colour image. It is expected that this will be the most effective approach. However, in some alternative examples the 2D image could be a monochrome or greyscale image. In such examples the extract super-pixels step 109 could process greyscale values of the image and identify and define atomic and coherent super-pixels having the same, or substantially the same, greyscale values.

In the illustrated embodiment the scene geometry estimation process 102 fits a single best fit cuboid to the estimated positions of the surfaces of the room and their intersecting edges. In alternative examples a scene geometry estimation process may be used to find a best fit of a number of planar surfaces to these estimated positions. This may enable more complex room shapes to be modeled. The skilled person will be aware of a number of known suitable scene geometry estimation processes, and any of these known processes may be used. In such alternative examples the scene geometry estimation process may provide the positions of the intersecting edges of the best fit planar surfaces and the number of the planar surfaces visible in the image for storage in the memory.

In the illustrated embodiment the first and second likelihood values are Gaussian likelihood values. In other examples one or both of the first and second likelihood values may be another, non-Gaussian, likelihood value.

In the illustrated embodiment the probability of each pixel in the obtained image being a boundary between different objects or surfaces visible in the obtained image is estimated in the estimate object boundaries step based on the super-pixels and the boundaries between the super-pixels defined in the extract super-pixels step. In other examples the probability of each pixel in the obtained image being a boundary may be estimated based upon other criteria. The skilled person will be aware of a number of known suitable boundary estimation techniques, and any of these known techniques may be used.

In the illustrated embodiment the modules of the system are defined in software. In other examples the modules may be defined wholly or in part in hardware, for exampel by dedicated electronic circuits.

In the described embodiments of the invention the modeling system 1 may be implemented as any form of a computing and/or electronic device.

Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

The computer executable instructions may be provided using any computer-readable media that is accessible by computing based device. Computer-readable media may include, for example, computer storage media such as a memory and communications media. Computer storage media, such as a memory, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media.

Although the modeling system 1 is shown as a single device it will be appreciated that this system may be distributed or located remotely and accessed via a network or other communication link (e.g. using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method steps or elements identified, but that such steps or elements do not comprise an exclusive list and a method or apparatus may contain additional steps or elements.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of the invention as defined by the appended claims.

## Claims

1. A computer implemented modeling system for automatically modeling a three-dimensional space based on a two-dimensional image of the three-dimensional space, the system comprising:
means arranged to obtain line segments corresponding to boundaries between surfaces of a three-dimensional space which are visible in the two-dimensional image;
means arranged to identify super-pixels and super-pixel boundaries between the super-pixels in the two-dimensional image of the three-dimensional space;
means arranged to assign first weighting values to pixels of identified super-pixel boundaries, the first weighting values assigned to pixels of a super-pixel boundary being determined by:
assigning a first likelihood value to the super-pixel boundary based upon the perpendicular distance between the super-pixel boundary and a nearest line segment;
assigning a second likelihood value to the super-pixel boundary based upon the difference in orientation between the super-pixel boundary and the nearest line segment;
calculating the product of the first likelihood value and the second likelihood value; and
assigning the product as a first weighting value to pixels of the super-pixel boundary;
means arranged to estimate the probability of pixels of the two-dimensional image representing a boundary between two objects in the two-dimensional image and assigning second weighting values to pixels based on the estimated probability;
means arranged to determine third weighting values for pixels of the two-dimensional image wherein the third weighting value is the product of the first weighting value and the second weighting value;
means arranged to partition a graph formed by the determined third weighting values with a number of partitions corresponding to the number of surfaces of the three-dimensional space which are visible in the two dimensional image to obtain a partitioned graph;
means arranged to combine the partitioned graph with the second weighting values to obtain a super-pixel graph by summing the third weighting value and the second weighting value assigned to each pixel; and
means arranged to segment the super-pixel graph to form a three-dimensional model of the three-dimensional space shown in the two-dimensional image.

2. The system according to claim 1, wherein the first likelihood value is based upon a perpendicular distance between a centroid of the super-pixel boundary and the nearest line segment.

3. The system according to claim 1 or claim 2, wherein the second likelihood value is based upon a difference in orientation between the super-pixel boundary and the nearest line segment.

4. The system according to any preceding claim, wherein the probability of a pixel of the two-dimensional image representing a boundary between two objects in the two-dimensional image is estimated based on the identified super-pixels.

5. The system according to any preceding claim, wherein the graph formed by the determined third weighting values is partitioned using a Normalised cuts algorithm.

6. The system according to any preceding claim, wherein the two-dimensional image is a colour image and the means arranged to estimate the probability of a pixel of the two-dimensional image representing a boundary between two objects in the two-dimensional image is arranged to estimate the probability based upon a comparison of colour values of pixels of the two-dimensional image.

7. The system according to any preceding claim, wherein the means arranged to obtain line segments corresponding to boundaries between surfaces of the three-dimensional space which are visible in the two-dimensional image is arranged to fit orthogonal surfaces to the two-dimensional image of the three-dimensional space and use edges of the fitted orthogonal surfaces as the line segments.

8. A computer implemented method of automatically modeling a three-dimensional space based on a two-dimensional image of the three-dimensional space, the method comprising:
obtaining line segments corresponding to boundaries between surfaces of a three-dimensional space which are visible in the two dimensional image;
identifying super-pixels and super-pixel boundaries between the super-pixels in the two-dimensional image of the three-dimensional space;
assigning first weighting values to pixels of identified super-pixel boundaries, the first weighting values assigned to pixels of a super-pixel boundary being determined by:
assigning a first likelihood value to the super-pixel boundary based upon the perpendicular distance between the super-pixel boundary and a nearest line segment;
assigning a second likelihood value to the super-pixel boundary based upon the difference in orientation between the super-pixel boundary and the nearest line segment;
calculating the product of the first likelihood value and the second likelihood value; and
assigning the product as a first weighting value to pixels of the super-pixel boundary;
estimating the probability of pixels of the two-dimensional image representing a boundary between two objects in the two-dimensional image and assigning second weighting values to pixel based on the estimated probability;
determining third weighting values for pixels of the two-dimensional image wherein the third weighting value is the product of the first weighting value and the second weighting value;
partitioning a graph formed by the determined third weighting values with a number of partitions corresponding to the number of surfaces of the three-dimensional space which are visible in the two dimensional image to obtain a partitioned graph;
combining the partitioned graph with the second weighting values to obtain a super-pixel graph by summing the third weighting value and the second weighting value assigned to each pixel; and
segmenting the super-pixel graph to form a three-dimensional model of the three-dimensional space shown in the two-dimensional image.

9. The method according to claim 8, wherein the first likelihood value is based upon the perpendicular distance between a centroid of the super-pixel boundary and the nearest line segment.

10. The method according to claim 8 or claim 9 wherein the second likelihood value is based upon a difference in orientation between the super-pixel boundary and the nearest line segment.

11. The method according to any one of claims 8 to 10 wherein the probability of a pixel of the two-dimensional image representing a boundary between two objects in the two-dimensional image is estimated based on the identified super-pixels.

12. The method according to any one of claims 8 to 11, wherein the graph formed by the determined third weighting values is partitioned using a Normalised cuts algorithm.

13. The method according to any one of claims 8 to 12, wherein the two-dimensional image is a colour image and the estimating the probability of a pixel of the two-dimensional image representing a boundary between two objects in the two-dimensional image is based upon a comparison of colour values of pixels of the two-dimensional image.

14. The method according to any one of claims 8 to 13, wherein obtaining the line segments comprises fitting orthogonal surfaces to the two-dimensional image of the three-dimensional space and using edges of the fitted orthogonal surfaces as the line segments.

15. A computer program comprising computer readable instructions which, when executed by a processor of a computer cause the computer to carry out the method of any one of claims 8 to 14.

## Patentansprüche

1. Computerimplementiertes Modellierungsystem zum automatischen Modellieren eines dreidimensionalen Raumes basierend auf einem zweidimensionalen Bild eines dreidimensionalen Raumes, wobei das System Folgendes umfasst:
ein Mittel, das angeordnet ist, um Strecken zu erhalten, die Grenzen zwischen Oberflächen eines dreidimensionalen Raumes entsprechen, die in dem zweidimensionalen Bild sichtbar sind;
das Mittel, das angeordnet ist, um Superpixel und Superpixelgrenzen zwischen den Superpixeln in dem zweidimensionalen Bild des dreidimensionalen Raumes zu identifizieren;
das Mittel, das angeordnet ist, um Pixeln identifizierter Superpixelgrenzen erste Gewichtungswerte zuzuweisen, wobei die ersten Gewichtungswerte, die Pixeln einer Superpixelgrenze zugewiesen werden, durch Folgendes bestimmt werden:
Zuweisen eines ersten Likelihoodwerts zu der Superpixelgrenze basierend auf dem senkrechten Abstand zwischen der Superpixelgrenze und einer nächsten Strecke;
Zuweisen eines zweiten Likelihoodwerts zu der Superpixelgrenze basierend auf der Differenz in der Ausrichtung zwischen der Superpixelgrenze und der nächsten Strecke;
Berechnen des Produkts aus dem ersten Likelihoodwert und dem zweiten Likelihoodwert; und
Zuweisen des Produkts als ersten Gewichtungswert zu Pixeln der Superpixelgrenze;
das Mittel, das angeordnet ist, um die Wahrscheinlichkeit von Pixeln des zweidimensionalen Bildes zu schätzen, eine Grenze zwischen zwei Objekten in dem zweidimensionalen Bild darzustellen, und Pixeln basierend auf der geschätzten Wahrscheinlichkeit zweite Gewichtungswerte zuzuweisen;
das Mittel, das angeordnet ist, um dritte Gewichtungswerte für Pixel des zweidimensionalen Bildes zu bestimmen, wobei der dritte Gewichtungswert das Produkt des ersten Gewichtungswerts und des zweiten Gewichtungswerts ist;
das Mittel, das angeordnet ist, um einen durch die bestimmten dritten Gewichtungswerte ausgebildeten Grafen mit einer Anzahl von Unterteilungen zu unterteilen, die der Anzahl von Oberflächen des dreidimensionalen Raumes entsprechen, die in dem zweidimensionalen Bild sichtbar sind, um einen unterteilten Grafen zu erhalten;
das Mittel, das angeordnet ist, um den unterteilten Grafen mit den zweiten Gewichtungswerten zu kombinieren, um einen Superpixelgrafen durch Summieren des dritten Gewichtungswerts und des jedem Pixel zugewiesenen zweiten Gewichtungswerts zu erhalten; und
das Mittel, das angeordnet ist, um den Superpixelgrafen zu segmentieren, um ein dreidimensionales Modell des dreidimensionalen Raumes auszubilden, der in dem zweidimensionalen Bild gezeigt ist.

2. System nach Anspruch 1, wobei der erste Likelihoodwert auf einem senkrechten Abstand zwischen einem Schwerpunkt der Superpixelgrenze und der nächsten Strecke basiert.

3. System nach Anspruch 1 oder 2, wobei der zweite Likelihoodwert auf einer Ausrichtungsdifferenz zwischen der Superpixelgrenze und der nächsten Strecke basiert.

4. System nach einem der vorhergehenden Ansprüche, wobei die Wahrscheinlichkeit eines Pixels des zweidimensionalen Bildes, eine Grenze zwischen zwei Objekten in dem zweidimensionalen Bild darzustellen, basierend auf den identifizierten Superpixeln geschätzt wird.

5. System nach einem der vorhergehenden Ansprüche, wobei der Graf, der durch die bestimmten dritten Gewichtungswerte ausgebildet wird, unter Verwendung eines normierten Schnittalgorithmus unterteilt wird.

6. System nach einem der vorhergehenden Ansprüche, wobei das zweidimensionale Bild ein Farbbild ist und das Mittel, das angeordnet ist, um die Wahrscheinlichkeit eines Pixels des zweidimensionalen Bildes zu schätzen, eine Grenze zwischen zwei Objekten in dem zweidimensionalen Bild darzustellen, angeordnet ist, um die Wahrscheinlichkeit basierend auf einem Vergleich von Farbwerten von Pixeln des zweidimensionalen Bildes zu schätzen.

7. System nach einem der vorhergehenden Ansprüche, wobei das Mittel, das angeordnet ist, um Strecken zu erhalten, die Grenzen zwischen Oberflächen des dreidimensionalen Raumes entsprechen, die in dem zweidimensionalen Bild sichtbar sind, angeordnet ist, um orthogonale Oberflächen an das zweidimensionale Bild des dreidimensionalen Raumes anzupassen und Kanten der angepassten orthogonalen Oberflächen als Strecken zu verwenden.

8. Computerimplementiertes Verfahren zum automatischen Modellieren eines dreidimensionalen Raumes basierend auf einem zweidimensionalen Bild des dreidimensionalen Raumes, wobei das Verfahren Folgendes umfasst:
Erhalten von Strecken, die den Grenzen zwischen Oberflächen eines dreidimensionalen Raumes entsprechen, die in dem zweidimensionalen Bild sichtbar sind;
Identifizieren von Superpixeln und Superpixelgrenzen zwischen den Superpixeln in dem zweidimensionalen Bild des dreidimensionalen Raumes;
Zuweisen von ersten Gewichtungswerten zu Pixeln identifizierter Superpixelgrenzen, wobei die ersten Gewichtungswerte, die Pixeln einer Superpixelgrenze zugewiesen werden, durch Folgendes bestimmt werden:
Zuweisen eines ersten Likelihoodwerts zu der Superpixelgrenze basierend auf dem senkrechten Abstand zwischen der Superpixelgrenze und einer nächsten Strecke;
Zuweisen eines zweiten Likelihoodwerts zu der Superpixelgrenze basierend auf der Differenz in der Ausrichtung zwischen der Superpixelgrenze und der nächsten Strecke;
Berechnen des Produkts aus dem ersten Likelihoodwert und dem zweiten Likelihoodwert; und
Zuweisen des Produkt als ersten Gewichtungswert zu Pixeln der Superpixelgrenze;
Schätzen der Wahrscheinlichkeit von Pixeln des zweidimensionalen Bildes, eine Grenze zwischen zwei Objekten in dem zweidimensionalen Bild darzustellen, und Zuweisen von zweiten Gewichtungswerten zu den Pixeln basierend auf der geschätzten Wahrscheinlichkeit;
Bestimmen dritter Gewichtungswerte für Pixel des zweidimensionalen Bildes, wobei der dritte Gewichtungswert das Produkt aus dem ersten Gewichtungswert und dem zweiten Gewichtungswert ist;
Unterteilen eines durch die bestimmten dritten Gewichtungswerte ausgebildeten Grafen mit einer Anzahl von Unterteilungen, die der Anzahl der in dem zweidimensionalen Bild sichtbaren Oberflächen des dreidimensionalen Raumes entspricht, um einen unterteilten Grafen zu erhalten;
Kombinieren des unterteilten Grafen mit den zweiten Gewichtungswerten, um einen Superpixelgrafen durch Summieren des dritten Gewichtungswerts und des zweiten Gewichtungswerts, die jedem Pixel zugewiesen sind, zu erhalten; und
Segmentieren des Superpixelgrafen, um ein dreidimensionales Modell des in dem zweidimensionalen Bild dargestellten dreidimensionalen Raumes auszubilden.

9. Verfahren nach Anspruch 8, wobei der erste Likelihoodwert auf dem senkrechten Abstand zwischen einem Schwerpunkt der Superpixelgrenze und der nächsten Strecke basiert.

10. Verfahren nach Anspruch 8 oder 9, wobei der zweite Likelihoodwert auf einer Ausrichtungsdifferenz zwischen der Superpixelgrenze und der nächsten Strecke basiert.

11. Verfahren nach einem der Ansprüche 8 bis 10, wobei die Wahrscheinlichkeit eines Pixels des zweidimensionalen Bildes, eine Grenze zwischen zwei Objekten in dem zweidimensionalen Bild darzustellen basierend auf den identifizierten Superpixeln geschätzt wird.

12. Verfahren nach einem der Ansprüche 8 bis 11, wobei der Graf, der durch die bestimmten dritten Gewichtungswerte ausgebildet wird, unter Verwendung eines normierten Schnittalgorithmus unterteilt wird.

13. Verfahren nach einem der Ansprüche 8 bis 12, wobei das zweidimensionale Bild ein Farbbild ist und das Schätzen der Wahrscheinlichkeit eines Pixels des zweidimensionalen Bildes, eine Grenze zwischen zwei Objekten in dem zweidimensionalen Bild darzustellen, auf einem Vergleich der Farbwerte von Pixeln des zweidimensionalen Bildes basiert.

14. Verfahren nach einem der Ansprüche 8 bis 13, wobei das Erhalten der Strecken ein Anpassen von orthogonalen Oberflächen an das zweidimensionale Bild des dreidimensionalen Raumes und das Verwenden von Kanten der angepassten orthogonalen Oberflächen als die Strecken umfasst.

15. Computerprogramm, umfassend computerlesbare Anweisungen, die, wenn sie von einem Prozessor eines Computers ausgeführt werden, den Computer veranlassen, das Verfahren nach einem der Ansprüche 8 bis 14 durchzuführen.

## Revendications

1. Système de modélisation mis en œuvre par ordinateur permettant la modélisation automatique d'un espace tridimensionnel sur la base d'une image bidimensionnelle de l'espace tridimensionnel, le système comprenant :
un moyen conçu pour obtenir des segments de ligne correspondant à des limites entre des surfaces d'un espace tridimensionnel qui sont visibles dans l'image bidimensionnelle ;
un moyen conçu pour identifier des super-pixels et des limites de super-pixels entre les super-pixels dans l'image bidimensionnelle de l'espace tridimensionnel ;
un moyen conçu pour attribuer des premières valeurs de pondération à des pixels de limites de super-pixels identifiés, les premières valeurs de pondération attribuées à des pixels d'une limite de super-pixels étant déterminées :
en attribuant une première valeur de vraisemblance à la limite de super-pixel basée sur la distance perpendiculaire entre la limite de super-pixel et un segment de ligne le plus proche ;
en attribuant une seconde valeur de vraisemblance à la limite de super-pixel basée sur la différence d'orientation entre la limite de super-pixel et le segment de ligne le plus proche ;
en calculant le produit de la première valeur de vraisemblance et de la seconde valeur de vraisemblance ; et
en attribuant le produit comme première valeur de pondération à des pixels de la limite de super-pixel ;
un moyen conçu pour estimer la probabilité du fait que des pixels de l'image bidimensionnelle représentent une limite entre deux objets dans l'image bidimensionnelle et attribuer des deuxièmes valeurs de pondération à des pixels sur la base de la probabilité estimée ;
un moyen conçu pour déterminer des troisièmes valeurs de pondération pour des pixels de l'image bidimensionnelle, la troisième valeur de pondération étant le produit de la première valeur de pondération et de la deuxième valeur de pondération ;
un moyen conçu pour partitionner un graphique formé des troisièmes valeurs de pondération déterminées selon un nombre de partitions correspondant au nombre de surfaces de l'espace tridimensionnel qui sont visibles dans l'image bidimensionnelle pour obtenir un graphique partitionné ;
un moyen conçu pour combiner le graphique partitionné et les deuxièmes valeurs de pondération pour obtenir un graphique de super-pixel en additionnant la troisième valeur de pondération et la deuxième valeur de pondération attribuées à chaque pixel ; et
un moyen conçu pour segmenter le graphique de super-pixel pour former un modèle tridimensionnel de l'espace tridimensionnel montré dans l'image bidimensionnelle.

2. Système selon la revendication 1, dans lequel la première valeur de vraisemblance est basée sur une distance perpendiculaire entre un centroïde de la limite de super-pixel et le segment de ligne le plus proche.

3. Système selon la revendication 1 ou la revendication 2, dans lequel la seconde valeur de vraisemblance est basée sur une différence d'orientation entre la limite de super-pixel et le segment de ligne le plus proche.

4. Système selon l'une quelconque des revendications précédentes, dans lequel la probabilité du fait qu'un pixel de l'image bidimensionnelle représente une limite entre deux objets dans l'image bidimensionnelle est estimée sur la base des super-pixels identifiés.

5. Système selon l'une quelconque des revendications précédentes, dans lequel le graphique formé des troisièmes valeurs de pondération déterminées est partitionné à l'aide d'un algorithme de coupes normalisées.

6. Système selon l'une quelconque des revendications précédentes, dans lequel l'image bidimensionnelle est une image en couleur et le moyen conçu pour estimer la probabilité du fait qu'un pixel de l'image bidimensionnelle représente une limite entre deux objets dans l'image bidimensionnelle est conçu pour estimer la probabilité sur la base d'une comparaison des valeurs chromatiques de pixels de l'image bidimensionnelle.

7. Système selon l'une quelconque des revendications précédentes, dans lequel le moyen conçu pour obtenir des segments de ligne correspondant à des limites entre des surfaces de l'espace tridimensionnel qui sont visibles dans l'image bidimensionnelle est conçu pour ajuster des surfaces orthogonales à l'image bidimensionnelle de l'espace tridimensionnel et utiliser des bords des surfaces orthogonales ajustées comme segments de ligne.

8. Procédé mis en œuvre par ordinateur permettant la modélisation automatique d'un espace tridimensionnel sur la base d'une image bidimensionnelle de l'espace tridimensionnel, le procédé comprenant :
l'obtention de segments de ligne correspondant à des limites entre des surfaces d'un espace tridimensionnel qui sont visibles dans l'image bidimensionnelle ;
l'identification de super-pixels et limites de super-pixels entre les super-pixels dans l'image bidimensionnelle de l'espace tridimensionnel ;
l'attribution de premières valeurs de pondération à des pixels de limites de super-pixels identifiés, les premières valeurs de pondération attribuées à des pixels d'une limite de super-pixel étant déterminées :
en attribuant une première valeur de vraisemblance à la limite de super-pixel basée sur la distance perpendiculaire entre la limite de super-pixel et un segment de ligne le plus proche ;
en attribuant une seconde valeur de vraisemblance à la limite de super-pixel basée sur la différence d'orientation entre la limite de super-pixel et le segment de ligne le plus proche ;
en calculant le produit de la première valeur de vraisemblance et de la seconde valeur de vraisemblance ; et
en attribuant le produit comme première valeur de pondération à des pixels de la limite de super-pixel ;
l'estimation de la probabilité du fait que des pixels de l'image bidimensionnelle représentent une limite entre deux objets dans l'image bidimensionnelle et l'attribution de deuxièmes valeurs de pondération aux pixels sur la base de la probabilité estimée ;
la détermination de troisièmes valeurs de pondération pour des pixels de l'image bidimensionnelle, la troisième valeur de pondération étant le produit de la première valeur de pondération et de la deuxième valeur de pondération ;
le partitionnement d'un graphique formé par les troisièmes valeurs de pondération déterminées selon un nombre de partitions correspondant au nombre de surfaces de l'espace tridimensionnel qui sont visibles dans l'image bidimensionnelle pour obtenir un graphique partitionné ;
la combinaison du graphique partitionné et des deuxièmes valeurs de pondération pour obtenir un graphique de super-pixel en additionnant la troisième valeur de pondération et la deuxième valeur de pondération attribuées à chaque pixel ; et
la segmentation du graphique de super-pixel pour former un modèle tridimensionnel de l'espace tridimensionnel montré dans l'image bidimensionnelle.

9. Procédé selon la revendication 8, dans lequel la première valeur de vraisemblance est basée sur la distance perpendiculaire entre un centroïde de la limite de super-pixel et le segment de ligne le plus proche.

10. Procédé selon la revendication 8 ou la revendication 9 dans lequel la seconde valeur de vraisemblance est basée sur une différence d'orientation entre la limite de super-pixel et le segment de ligne le plus proche.

11. Procédé selon l'une quelconque des revendications 8 à 10 dans lequel la probabilité d'u fait qu'un pixel de l'image bidimensionnelle représente une limite entre deux objets dans l'image bidimensionnelle est estimée sur la base des super-pixels identifiés.

12. Procédé selon l'une quelconque des revendications 8 à 11, dans lequel le graphique formé par les troisièmes valeurs de pondération déterminées est partitionné à l'aide d'un algorithme de coupes normalisées.

13. Procédé selon l'une quelconque des revendications 8 à 12, dans lequel l'image bidimensionnelle est une image en couleur et l'estimation de la probabilité du fait qu'un pixel de l'image bidimensionnelle représente une limite entre deux objets de l'image bidimensionnelle est basée sur une comparaison des valeurs chromatiques de pixels de l'image bidimensionnelle.

14. Procédé selon l'une quelconque des revendications 8 à 13, dans lequel l'obtention des segments de ligne comprend l'ajustement des surfaces orthogonales à l'image bidimensionnelle de l'espace tridimensionnel et l'utilisation de bords des surfaces orthogonales ajustées comme segments de ligne.

15. Programme informatique comprenant des instructions lisibles par ordinateur qui, lorsqu'elles sont exécutées par un processeur d'un ordinateur, amènent l'ordinateur à exécuter le procédé de l'une quelconque des revendications 8 à 14.
